# EUROPÄISCHE PATENTSCHRIFT

(11) **EP 0 667 822 B1**
(45) Veröffentlichungstag und Bekanntmachung des Hinweises auf die Patenterteilung: **02.04.1997**
(21) Anmeldenummer: 93924023.0
(22) Anmeldetag: 05.11.1993
(51) Int. Cl.: B60R 21/00

(54) **STEUEREINHEIT MIT EINEM LUFTDRUCKDETEKTOR FÜR EIN INSASSENSCHUTZSYSTEM EINES FAHRZEUGES**
CONTROL UNIT WITH AN AIR PRESSURE DETECTOR FOR THE PASSENGER PROTECTION SYSTEM OF A VEHICLE
UNITE DE COMMANDE A DETECTEUR DE LA PRESSION D'AIR POUR SYSTEME DE PROTECTION DES PASSAGERS D'UN VEHICULE

(30) Priorität: 11.11.1992 DE 9215382 U; 06.07.1993 DE 4322488
(43) Veröffentlichungstag der Anmeldung: 23.08.1995
(73) Patentinhaber: SIEMENS AKTIENGESELLSCHAFT, 80333 München (DE)
(72) Erfinder: DIRMEYER, Josef, D-92439 Bodenwöhr (DE); PROBST, Heinrich, D-93105 Tegernheim (DE); BAUER, Hans-Peter, D-93049 Regensburg (DE); GRUBER, Robert, D-93057 Regensburg (DE); MADER, Gerhard, Dr., D-93107 Thalmassing (DE); FRIMBERGER, Manfred, D-84061 Ergoldsbach (DE); PFAU, Lorenz, D-93053 Regensburg (DE)
(86) Internationale Anmeldenummer: DE9301059
(87) Internationale Veröffentlichungsnummer: WO9411223

(56) Entgegenhaltungen:
- EP-A- 0 305 655
- EP-A- 0 445 907
- DE-A- 1 944 289
- DE-A- 3 719 029
- DE-A- 3 729 019
- US-A- 4 346 914
- US-A- 4 842 301

## Beschreibung

Die Erfindung betrifft eine Steuereinheit für ein Insassenschutzsystem eines Fahrzeuges.

Eine solche Steuereinheit (DE-A-1 944 289) weist einen oder mehrere miteinander verbundene, langgestreckte Hohlkörper rund um die Karosserie auf, die mit einem flüssigen oder gasförmigen Medium gefüllt sind. An den Enden oder an Anschlußstellen sind Auslöser in Form von Ventilen angebracht, die bei einer Verformung des Hohlkörpers die sich ausbreitende Druckwelle erkennen.

Eine solche Steuereinheit weist einen komplexen Aufbau auf. Durch die Anordnung rohrförmiger Hohlkörper wird nur ein Aufprall erkannt, der den Hohlkörper mit seinen kleinen Abmessungen verformt. Eine großflächigen Verlegung der mit einem Medium gefüllten Hohlkörper ist andererseits aus Gewichtsgründen nicht praktikabel und zu aufwendig. Desweiteren kann durch die Anordnung von Auslösern an den Enden der Hohlkörper und insbesondere bei flüssigen Medien in den Hohlkörpern die Zeitspanne zwischen dem Aufprall und der Aufnahme der Druckwelle durch den Auslöser sehr groß sein.

Eine weitere Steuereinheit (EP-A-0 305 654) weist mehrere Körperschallsensoren und Mikrofone auf, die die durch einen Aufprall hervorgerufenen Schall- und Körperschallschwingungen messen. Die akustischen Leistungsspektren der Schall- und Körperschallsignale werden hinsichtlich Art und Richtung des Aufpralls ausgewertet.

Die akustischen Leistungsspektren von Schall- und Körperschallsignalen lassen keine Aussage hinsichtlich der Schwere eines Aufpralls zu.

Aufgabe der Erfindung ist es, diese Nachteile zu vermeiden und eine einfache Steuereinheit für ein Insassenschutzsystem eines Fahrzeugs zu schaffen, die schnell die Schwere eines Unfalls erkennt.

Die Erfindung löst diese Aufgabe bei einer Steuereinheit der eingangs genannten Art durch die Merkmale des Anspruchs 1.

Bei der Erfindung wird ausgenutzt, daß beim Unfall die Luft im verformten Seitenteil als Umgebungsluft eines Luftdrucksensors komprimiert wird, sobald sich das Fahrzeug im Bereich der Aufprallstelle verformt. Dieser weitgehend adiabatische Druckanstieg im Seitenteil wird von dem Luftdrucksensor gemessen. Bei einer Verformung des Seitenteils detektiert der Luftdrucksensor in seiner Umgebungsluft evtl. zusätzlich das Auftreten einer sich rasch ausbreitenden Druckwellenfront. Ob die adiabatisch entstandene Komponente des detektierten Druckanstiegs stärker ist als die durch die Druckwellenfront erzeugte Komponente, hängt vor allem davon ab wie stark der vom Luftdrucksensor überwachte Luftraum in sich abgeschlossen ist und wie groß dieser Luftraum ist.

Der Luftdrucksensor kann ein Mikrofon sein. Ein durch einen Aufprall verursachtes Luftdruckänderungssignal enthält extrem niederfrequente Luftdruckschwingungen. Höherfrequente Luftvibrationen des bei einem Aufprall evtl. auftretenden Schalls werden zwar auch durch den Luftdrucksensor gemessen, aber nicht ausgewertet, sondern bei Bedarf weggefiltert, um ein Sensorausgangssignal zu erhalten, das nur den Luftdruckanstieg im Seitenteil wiedergibt.

Bei einem schweren Aufprall ist der Druckanstieg in dem Seitenteil wesentlich höher als bei einem leichten Aufprall. Durch Crashversuche wird für den jeweiligen Fahrzeugtyp der Mindestwert des Druckanstieges ermittelt, der das Insassenschutzsystem gerade noch auslösen soll.

Vorteilhafte Ausgestaltungen der Erfindung sind in den Unteransprüchen gekennzeichnet.

Die Erfindung und Weiterbildungen derselben werden anhand der Zeichnung erläutert. Dabei zeigen Figur
1 den Sensor der Steuereinheit in einer Seitentür eines Fahrzeuges,
2 einen Luftdrucksensor,
3 ein Kfz, das durch ein anderes Kfz einen Seitenaufprall erleidet.

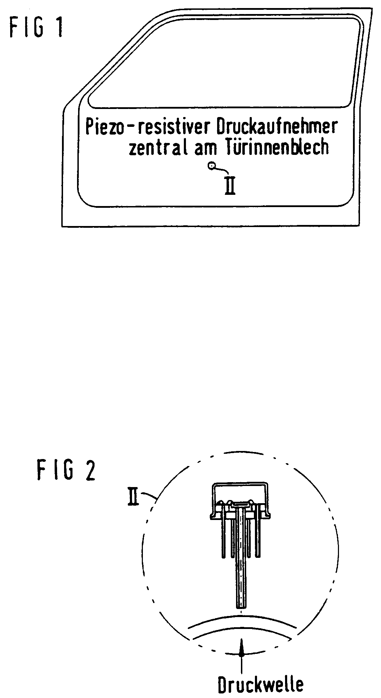

Figur 2 zeigt ein Halbleiter-Mikrofon als Luftdrucksensor der erfindungsgemäßen Steuereinheit mit einer Membran, deren Auslenkung nach dem piezoresistiven Prinzip gemessen wird. Die Auslenkung der Membran kann auch nach dem piezoelektrischen, induktiven oder einem sonstigen Prinzip gemessen werden. Der Luftdrucksensor muß jedenfalls die extrem niederfrequenten Komponenten aufnehmen, die einen Luftdruckanstieg innerhalb von wenigen msec kennzeichnen. Es kann auch ein Luftdrucksensor ohne Membran benutzt werden, z.B. ein Luftdrucksensor mit einer durch Luftdruckänderungen deformierbaren Kapsel.

Der Luftdrucksensor ist gemäß Figur 1 zentral im Inneren der Fahrzeugtüre neben der Außenhaut der Türe angeordnet. Der Luftdrucksensor kann aber auch nahe in einem anderen Seitenteil des Fahrzeugs angeordnet werden.

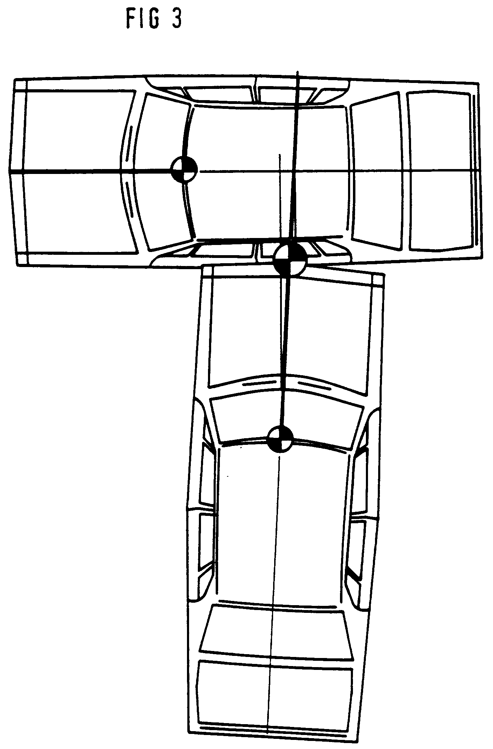

Der Luftdrucksensor liefert bei einem Seitenaufprall gemäß Figur 3, bei dem das Seitenteil mit dem Luftdrucksensor deformiert und damit der Luftdruck in der Umgebungsluft des Luftdrucksensors komprimiert wird, an eine in den Figuren nicht gezeigte Elektronik der Steuereinheit analoge, den gemessenen Luftdruckänderungen entsprechende Ausgangssignale.

Diese Ausgangssignale sind durch die Stärke der Deformation des Seitenteils und damit durch die auf das Fahrzeug wirkenden Beschleunigungskräfte bestimmt.

Die Elektronik ermittelt aus dem aufgenommenen Verlauf der Luftdruckänderung, insbesondere aus der Amplitude der Luftdruckänderung, dem Verlauf der Luftdruckänderung über der Zeit, und der Geschwindigkeit der Luftdruckänderung die Schwere des Aufpralls. Das Ausgangssignal des Luftdrucksensors wird beispielsweise integriert. Das Zeitintegral über der Druckkurve ist dabei proportional zur Deformationsenergie, welche das Seitenteil aufnimmt, und damit ein Maß für die Schwere des Aufpralls. Desweiteren kann jeweils die Differenz zwischen dem soeben ermittelten Wert des Integrals und dem zuvor ermittelten Wert des Integrals berechnet werden und damit die Steilheit des Druckanstiegs und damit die Geschwindigkeit der Luftdruckänderungen ermittelt werden, um das Insassenschutzsystem nur bei Überschreiten von Mindeststeilheitswerten auszulösen. Desweiteren wird die Amplitude der Druckänderung mit einer Mindestamplitude verglichen und das Insassenschutzsystem nur bei Überschreiten der Mindestamplitude ausgelöst.

Nach vorgenannter Auswertung des gemessenen Verlaufs der Luftdruckänderung zur Ermittlung der Schwere des Unfalls wird gegebenfalls das Insassenschutzsystem angesteuert. Dabei liefert die vorgenannte Auswertung Informationen über die Art der anzusteuernden Schutzmittel (Airbags), den optimalen Zeitpunkt der Ansteuerung dieser Schutzmittel und den zeitlichen Verlauf der Ansteuerung einzelner Schutzmittel, wie z.B. das dosierte Aufblasen eines Airbags.

Durch die Anordnung mehrerer erfindungsgemäßer Luftdrucksensoren oder der Anordnung eines oder mehrerer Crashsensoren zusätzlich zu dem erfindungsgemäßen Luftdrucksensor an verschiedenen Stellen der Fahrzeugseitenteile kann insbesondere die Aufprallrichtung und auch die Aufprallstelle genauer ermittelt werden. Dabei werden ein Luftdrucksensor z.B. besonders nahe am Außenblech der Türe und ein zweiter Luftdrucksensornahe an der B-Säule des Fahrzeuges angeordnet. Aus der Zeitdifferenz und aus den unterschiedlichen Amplituden der aufgenommenen Signale werden Aufprallstelle und Aufprallrichtung ermittelt. Mit diesen Informationen werden die Auslösemittel differenzierter an die Schwere des Unfalls angepaßt.

An stark versteiften Karosseriestelle, wie z.B. der B-Säule eines Fahrzeugs, wird vorzugsweise ein herkömmlicher Beschleunigungssensor angeordnet, dessen Ausgangssignale zusammen mit den Ausgangssignalen des Luftdrucksenors in der Türe ein Kriterium zur Auslösung von Insassenschutzsystemen bildet. Bei dem Einsatz eines Luftdrucksensors oder keines Sensors an einem solchen versteiften Karosserieteil kann der gemessene Luftdruckanstieg in der Tür zu klein sein, um das Insassenschutzsystem auszulösen, obwohl es wegen der objektiven Schwere dieses Unfalls schon auszulösen wäre, nur aber das versteifte Karosserieteil sich kaum verformt und damit keinen Luftdruckanstieg im versteiften Karosserieteil und nur einen mäßigen Luftrduckanstieg in der benachbarten Tür zur Folge hat.

Die Laufzeit zwischen der Verformung des betreffenden Seitenteils und dem Detektieren des Druckanstieges ist, wie Versuche zeigten, besonders kurz. Schon nach Bruchteilen von einer msec kann bei einem Luftdrucksensor, der wie in der Figur 1 im Zentrum der Türe angebracht ist, der Luftdruckanstieg bei einem Seitenaufprall deutlich gemessen werden, was kurz ist gegen die Laufzeit zwischen einer solchen Aufprallstelle und einem zentral, z.B. im Lenkrad, angeordneten Sensor. Die Verwendung eines schnell ansprechenden Mikrofons verkürzt die Reaktionszeit der Steuereinheit zudem.

Die Steuereinheit kann die Ausgangssignale des Sensors filtern (Filterfunktion evtl. abhängig vom Fahrzeugtyp), um der Elektronik nur Ausgangssignale des Luftdrucksensors im bevorzugten unteren Frequenzbereich, z.B. unterhalb von 1 kHz, zur Verfügung zu stellen.

Durch die Anordnung des Sensors in einem weitgehend dichten, abgeschlossenen Hohlkörper in einem Seitenteil des Fahrzeugs wird ein Luftdruckanstieg in der Umgebung des Sensors besonders genau aufgenommen. Damit wird die Empfindlichkeit der Sensoreinheit vergrößert.

Wird der Sensor im Zentrum eines Seitenteils angebracht, wird die Laufzeit der von der Deformation ausgelösten Druckwelle zwischen der jeweiligen Aufprallstelle und dem Sensor minimiert, insbesondere bei Deformationen in den Außenbereichen des Seitenteils.

Desweiteren kann ein Körperschallsensor im Seitenteil angeordnet werden, damit der bei deutlich höheren Frequenzen auftretenden Körperschall, z.B. zwischen 10 kHz und 100 kHz, zusätzlich ausgewertet wird, um weitere Informationen überr die Schwere des Aufpralls zu gewinnen. Ist der Luftdrucksensor selbst ein Mikrofon, kann dieses Mikrofon auch als Körperschallsensor wirken. Mit Filter werden Luftdruckanstieg und Körperschall getrennt und von der Steuereinheit getrennt ausgewertet. Durch die Auswertung von Zeitdifferenzen der verschiedenen Ausgangssignale und ihrer unterschiedlichen Amplituden werden Aufprallrichtung und Aufprallstelle ermittelt.

## Patentansprüche

1. Steuereinheit für ein bei einem entsprechend schweren Verkehrsunfall auszulösendes Insassenschutzsystem eines Fahrzeuges, mit mindestens einem auf Druckanstieg in einem Hohlkörper ansprechenden, in einem Seitenteil der Fahrzeugkarosserie angeordneten Detektor, der als Sensor zur Erkennung des einen Seitenaufprall darstellenden Verkehrsunfalls dient,
**dadurch gekennzeichnet**,
daß ein weitgehend geschlossenes Seitenteil der Fahrzeugkarosserie als Hohlkörper dient und ein Steuergerät des Insassenschutzsystems den bei dem Seitenaufprall in dem Hohlkörper auftretenden, durch den Sensor erfaßten stoßartigen und weitgehend adiabatischen Luftdruckanstieg auswertet.

2. Steuereinheit nach Patentanspruch 1, dadurch gekennzeichnet, daß der Sensor ein piezoelektrisches oder piezoresistives Piezomikrofon oder ein kapazitiv oder induktiv eine Membranbewegung detektierender Drucksensor ist und zentral im Inneren einer Seitentüre nahe dem stählernen Außenblech dieses Seitenteils angeordnet ist.

3. Steuereinheit nach Patentanspruch 1 oder 2, dadurch gekennzeichnet, daß die Steuereinheit die Ausgangssignale des Sensors entsprechend ihrem Frequenzengehalt filtert und, abhängig vom Fahrzeugtyp, bevorzugt den Frequenzbereich unterhalb einer Grenzfrequenz, z.B. unterhalb von 1 kHz, auswertet.

4. Steuereinheit nach Anspruch 1, dadurch gekennzeichnet, daß sie die vom Sensor gelieferten analogen oder quasi-analogen Luftdruckwerte integriert.

5. Steuereinheit nach Anspruch 1, dadurch gekennzeichnet , daß sie Steilheiten des vom Seitenaufprall ausgelösten Druckanstieges in der Umgebungsluft des Sensors ermittelt und das Insassenschutzsystem nur bei Überschreiten von Mindeststeilheitswerten auslöst.

6. Steuereinheit nach Anspruch 1, dadurch gekennzeichnet , daß sie die Amplituden des vom Seitenaufprall ausgelösten Druckanstieges in der Umgebungsluft des Sensors ermittelt und das Insassenschutzsystem nur bei Überschreiten einer Mindestamplitude auslöst.

7. Steuereinheit nach Anspruch 1, dadurch gekennzeichnet, daß sie zusätzlich einen den Seitenaufprall detektierenden Beschleunigungs- bzw. Verzögerungssensor enthält und daß sie das Insassenschutzsystem auch dann auslöst, wenn zwar die Ausgangssignale des Luftdrucksensors für sich noch nicht ein für die Auslösung des Insassenschutzsystemes ausreichendes Kriterium liefern, aber die Ausgangssignale des Beschleunigungs- bzw. Verzögerungssensors - zumindest in Verbindung mit den Ausgangssignalen des Luftdrucksensors - ein für die Auslösung des Insassenschutzsystemes ausreichendes Kriterium liefern.

8. Steuereinheit nach Anspruch 1, dadurch gekennzeichnet, daß ihr Sensor in dem, eine zumindest weitgehend dichte Kapsel darstellenden, Hohlraum der Seitentüre angebracht ist.

9. Steuereinheit nach Anspruch 1, dadurch gekennzeichnet, daß sie zusätzlich einen Sensor enthält, der nicht oder nicht ausschließlich zur Luftdrucküberwachung dient.

10. Steuereinheit nach Anspruch 1, dadurch gekennzeichnet, daß sie mit einem Körperschallsensor auch den im Seitenteil bei deutlich höheren Frequenzen auftretenden Körperschall auswertet, z.B. zwischen 10 kHz und 100 kHz.

## Claims

1. Control unit for a vehicle occupant protection system to be triggered in the case of a correspondingly serious traffic accident, having at least one detector which responds to a rise in pressure in a hollow element, the detector is arranged in a side component of the vehicle body and serves as a sensor for detecting the traffic accident which constitutes a lateral impact, characterized in that a largely enclosed side component of the vehicle body serves as hollow element and a control device of the vehicle occupant protection system evaluates the impulse-like and largely adiabatic rise in air pressure which occurs in the hollow element in the case of a lateral impact and is detected by the sensor.

2. Control unit according to Claim 1, characterized in that the sensor is a piezoelectric or piezoresistive microphone or a pressure sensor which detects a diaphragm movement capacitively or inductively and is arranged centrally in the interior of a side door near to the steel outer skin of this side component.

3. Control unit according to Claim 1 or 2, characterized in that the control unit filters the output signals of the sensor in accordance with their frequency content and, depending on the type of vehicle, preferably evaluates the frequency range below a limit frequency, for example below 1 kHz.

4. Control unit according to Claim 1, characterized in that it integrates the analogue or quasi-analogue air pressure values supplied by the sensor.

5. Control unit according to Claim 1, characterized in that it determines gradients of the rise in pressure, triggered by the lateral impact, in the air surrounding the sensor and triggers the vehicle occupant protection system only when minimum gradient values are exceeded.

6. Control unit according to Claim 1, characterized in that it determines the amplitudes of the rise in pressure, triggered by the lateral impact, in the air surrounding the sensor and triggers the vehicle occupant protection system only when a minimum amplitude is exceeded.

7. Control unit according to Claim 1, characterized in that it additionally contains an acceleration and deceleration sensor which detects the lateral impact, and in that it triggers the vehicle occupant protection system even if the output signals of the air pressure sensor in themselves do not yet provide a criterion which is sufficient for triggering the vehicle occupant protection system, but the output signals of the acceleration and deceleration sensor provide - at least in conjunction with the output signals of the air pressure sensor - a criterion which is sufficient for triggering the vehicle occupant protection system.

8. Control unit according to Claim 1, characterized in that its sensor is mounted in the side-door cavity which constitutes an at least largely sealed capsule.

9. Control unit according to Claim 1, characterized in that it additionally contains a sensor which is not used, or not used exclusively, for monitoring air pressure.

10. Control unit according to Claim 1, characterized in that it also evaluates, with a solid-borne sound sensor, the solid-borne sound which occurs in the side component at significantly higher frequencies, for example between 10 kHz and 100 kHz.

## Revendications

1. Unité de commande pour un système de protection des passagers d'un véhicule, destiné à se déclencher en cas d'accident de circulation relativement grave, comportant au moins un détecteur, disposé dans une partie latérale de la carrosserie du véhicule et réagissant à une montée de la pression dans un corps creux, ce détecteur servant de capteur pour reconnaître un accident de circulation présentant un choc latéral, caractérisée en ce que
une partie latérale, largement fermée, de la carrosserie du véhicule sert de corps creux et un appareil de commande du système de protection des passagers interprète la montée brutale en pression de l'air, pratiquement adiabatique, détectée par le capteur et se produisant dans le corps creux lors du choc latéral.

2. Unité de commande suivant la revendication 1, caractérisée en ce que le capteur est un piézo-microphone piézo-électrique ou piézo-résistif ou un capteur de pression, détectant le mouvement d'une membrane, par capacité ou induction, et en ce qu'il est disposé à l'intérieur d'une porte latérale, en son centre, au voisinage de la tôle extérieure en acier de cette partie latérale.

3. Unité de commande suivant la revendication 1 ou la revendication 2, caractérisée en ce que l'unité de commande filtre les signaux de sortie du capteur en fonction du contenu de leur fréquence, et, en fonction du type de véhicule, interprète de préférence la zone de fréquence située en-dessous d'une fréquence limite, par exemple en-dessous de 1 kHz.

4. Unité de commande suivant la revendication 1, caractérisée en ce que l'unité de commande intègre les valeurs de la pression d'air analogiques ou quasi-analogiques, fournies par le capteur.

5. Unité de commande suivant la revendication 1, caractérisée en ce qu'elle détecte les pentes de la courbe montante de la pression provoquée par le choc latéral dans l'air environmant du capteur, et ne déclenche le système de protection des passagers qu'en cas de dépassement de valeurs minimales de la pente de cette courbe.

6. Unité de commande suivant la revendication 1, caractérisée en ce que l'unité de commande détecte les amplitudes de la montée en pression déclenchée par le choc latéral dans l'air environnant le capteur, et ne déclenche le système de protection des passagers qu'en cas de dépassement d'une amplitude minimale.

7. Unité de commande suivant la revendication 1, caractérisée en ce qu'elle comporte, en plus, un capteur d'accélération ou de décélération, détectant le choc latéral, et en ce qu'elle déclenche le système de protection des passagers même si les signaux de sortie du capteur de pression d'air ne fournissent pas encore vraiment un critère suffisant pour déclencher le système de protection des passagers, alors que les signaux de sortie du capteur d'accélération ou de décélération - au moins en liaison avec les signaux de sortie du capteur de pression d'air - fournissent un critère suffisant pour déclencher le système de protection des passagers.

8. Unité de commande suivant la revendication 1, caractérisée en ce que son capteur est disposé dans le volume creux des portières latérales, représentant une capsule au moins largement étanche.

9. Unité de commande suivant la revendication 1, caractérisée en ce que l'unité de commande contient, de plus, un capteur ne servant pas, ou ne servant pas exclusivement, à la surveillance de la pression d'air.

10. Unité de commande suivant la revendication 1, caractérisée en ce que l'unité de commande interprète, avec un capteur de bruit de masse, également le bruit de masse se produisant dans la partie latérale pour des fréquences nettement plus élevées, par exemple entre 10 KHz et 100 kHz.
